# EUROPÄISCHE PATENTSCHRIFT

(11) **EP 1 018 063 B1**
(45) Veröffentlichungstag und Bekanntmachung des Hinweises auf die Patenterteilung: **26.05.2004**
(21) Anmeldenummer: 98919131.7
(22) Anmeldetag: 23.03.1998
(51) Int. Cl.: G05D 23/13, F24D 17/00

(54) **REGLER**
REGULATOR
REGULATEUR

(30) Priorität: 22.03.1997 DE 19712051; 16.10.1997 DE 29718257 U
(43) Veröffentlichungstag der Anmeldung: 12.07.2000
(73) Patentinhaber: Miller, Bernhard, 71263 Weil der Stadt (DE)
(72) Erfinder: Miller, Bernhard, 71263 Weil der Stadt (DE)
(74) Vertreter: Weiss, Peter, Dr.
(86) Internationale Anmeldenummer: PCT/EP1998/001690
(87) Internationale Veröffentlichungsnummer: WO 1998/043143

(56) Entgegenhaltungen:
- EP-A- 0 751 355
- US-A- 2 842 155

## Beschreibung

Die Erfindung betrifft einen Regler, insbesondere Zirkulationsregler zum Bereitstellen von erwärmtem Wasser an einem Abnehmer, einer Mischbatterie oder dgl. Verbraucher . Ein Regler gemäß dem Oberbegriff des Anspruchs 1 ist aus US-A-2 842 155 bekannt.

Derartige Regler sind heutzutage nur als Systemlösungen, aufwendig konzipierter Anlagen mit teuren Apparaturen und hochkomplexen Bauteilen auf dem Markt bekannt und gebräuchlich. Mit ihnen wird erreicht, dass warmes Wasser direkt unmittelbar an der Zapfstelle bzw. an einer Mischbatterie schon warm vorhanden ist. Dies verursacht unerwünschte Wärme- und Energieverluste.

Heutzutage ist besonders nachteilig, dass bei herkömmlichen Zirkulationssystemen das Wasser innerhalb der Zuleitung einer Warmwasserhauptleitung stark abkühlt, wenn die Mischbatterie nicht in Betrieb gesetzt ist. Wird diese in Betrieb genommen, um warmes Wasser zu erhalten, so strömt eine gewisse Zeit lang zuerst das kalte Wasser aus der Wasserleitung, bis Warmwasser in die Leitung an den Wasserhahn gelangt. Dies verursacht unnötigen Zeitaufwand, Wasser- und Energiekosten.

Zwar sind aus dem Stand der Technik bspw. aus der DE-OS 35 22 344 Warmwasser-Versorgungssysteme bekannt, diese arbeiten jedoch mit Zirkulationsleitungen, welche nicht hinreichend isoliert sind. Dabei treten erhebliche Wärmeverluste auf.

Ein weiterer Nachteil ist, dass eine permanente Zirkulation vom warmen Wasser allein schon durch die Pumpe viel Energie verbraucht. Zudem treten hohe Wärmeverluste des Wassers beim Durchströmen von Leitungen auf, so dass auch hier ein Verlust von Wärmeenergie zu verzeichnen ist. Dies ist ebenso unerwünscht.

Ein weiterer Nachteil herkömmlicher Zirkulationssysteme ist, dass diese schlecht regelbar sind und sich schlecht nachrüsten lassen. Dazu müsste das gesamte Warm- und Kaltwasserleitungssystem erneuert werden, um mit herkömmlichen Techniken schnell, ohne Energieverluste, warmes Wasser zu erhalten. Dies ist mit hohen Kosten verbunden.

Der vorliegenden Erfindung liegt die Aufgabe zugrunde, einen Regler zu schaffen, welcher die o.g. Nachteile beseitigt und mit welchem sehr kostengünstig auch herkömmliche Zirkulationssysteme nachgerüstet werden können. Ferner soll ein derartiger Regler beliebig in verschiedensten Mischbatterien auch für unterschiedliche Abnehmer eingesetzt werden können. Ferner sollen Strömungseigenschaften des derartigen Reglers erheblich verbessert werden.

Zur Lösung dieser Aufgabe führt, dass im Regler zwischen einer Warmwasserleitung und einer Kaltwasserleitung eine Verbindung temperaturabhängig hergestellt oder unterbrochen ist.

Mit der vorliegenden Erfindung ist ein Regler geschaffen, welcher direkt an eine Mischbatterie, bspw. eines Waschbeckens anschliessbar ist. Dieser kann auch selbst Bestandteil der Mischbatterie sein. Hier sind viele Möglichkeiten denkbar, um einen derartigen Regler an/oder in Mischbatterien von Waschbecken, Duschen und dgl. sanitären Einrichtungen anzuschliessen.

Ein wesentlicher Vorteil der vorliegenden Erfingung ergibt sich, wenn die Mischbatterie nicht in Betrieb gesetzt ist, und eine permanente Wassertemperatur der Warmwasserleitung im Regler oder der Mischbatterie vorort gehalten wird. Dabei fliesst das warme Wasser von einem Warmwasserspeicher über eine herkömmliche Hauptleitung in eine Warmwasserleitung, welche zur Mischbatterie führt.

Dort tritt das warme Wasser in den Regler ein und wird im Regler selbst durch einen zylinderartigen Raum geführt, in welchem ein Thermostatventil mit Arbeitskolben angeordnet ist. Das Thermostatventil wird vom warmen Wasser umströmt.

Anschliessend stömt das Wasser durch eine Ausnehmung des Absperrventils in eine Verbindungsleitung, welche in die Kaltwasserleitung mündet. Im Regler ist nun erwärmtes Wasser. Anschliessend wird das Wasser der Kaltwasserhauptleitung zugeführt. Dabei erwärmt sich auch das Wasser der Kaltwasserhauptleitung, welches in Richtung der Steuereinrichtung fliesst und von dort an den Warmwasserspeicher abgegeben wird.

Somit ist das kalte Wasser vor Eintritt in den Warmwasserspeicher ebenso vorgewärmt. Daher sind erheblich geringere Energiekosten notwendig, um das Wasser des Warmwasserspeichers auf Betriebstemperatur zu erwärmen.

Ist im Regler eine gewünschte, durch das Thermostatventil bestimmbare Temperatur erreicht, so fährt eine Schubstange aus, und drückt einen Arbeitskolben gegen eine Scheibe. Diese wiederum verschliesst eine Öffnung im Deckel des Gehäuses des Reglers. Dadurch wird die Kammer, in welche die Warmwasserleitung mündet, verschlossen. Kühlt die Wassertemperatur im Regler wieder ab, so wird die Schubstange des Thermostatventils eingefahren und eine Rückstellfeder drückt den Arbeitskolben nach unten und gibt die Öffnung im Deckel frei, so dass das Wasser wieder aus der Warmwasserleitung durch den Regler in die Kaltwasserleitung stömen kann.

Das Wasser strömt solange durch den Regler, bis eine geeichte und durch den Thermostat vorherbestimmte Wassertemperatur erreicht ist. Dann unterbindet das Thermostatventil den Durchfluss. Somit findet auf einfache Weise eine Regelung statt, um ständig warmes Wasser direkt am Regler bzw. direkt an der Mischbatterie zu halten, ohne dass eine ständige permanente Zirkulation notwendig wäre.

Wird nun Wasser von der Mischbatterie entnommen, so stömt das erwärmte Wasser durch die Warmwasserleitung in eine Kammer des Deckels und wird von dort über eine Zuführung in die Leitung für Warmwasser zur Mischbatterie transportiert. Ein weiterer Teil strömt durch die Öffnung in den zylinderartigen inneren Raum, wobei jedoch bei Erreichen der Betriebstemperatur das Thermostatventil die Öffnung unmittelbar verschliesst.

Wird allerdings gleichzeitig kaltes Wasser verbraucht, so strömt von der Kaltwasserhauptleitung kaltes, allerdings schon leicht vorgewärmtes Wasser, in die Kaltwasserleitung. Von dort strömt das kalte Wasser durch die Verbindungsleitung direkt in eine weitere Leitung für kaltes Wasser zur Mischbatterie. Ein weiterer Strom an kaltem Wasser strömt von der Verbindungsleitung durch eine Ausnehmung des Absperrventils in den zylindrischen Raum. Dabei wird die Scheibe durch die Strömung mit Druck beaufschlagt und gegen eine Öffnung der Kammer gepresst.

Eine Verbindung zur Warmwasserleitung ist nun unabhängig von der Funktion des Thermostatventils unterbrochen.

Die Scheibe, welche im innerhalb einer Rückstellfeder des Arbeitskolbens schwebend gehalten bzw. geführt wird, ist vorzugsweise aus Kunststoff und von geringerer Dichte als Wasser hergestellt. Diese verschliesst, wenn kaltes Wasser durch den Innenraum strömen sollte, unmittelbar die Öffnung zur anschliessenden Kammer des Deckels.

Eine weitere Besonderheit der vorliegenden Erfindung liegt auch darin, dass der Regler bzw. die Zirkulation abgeschaltet werden kann, wenn eine Zirkulation von Warmwasserleitung zur Kaltwasserleitung durch den Regler nicht gewünscht wird. Dies kann auf unterschiedliche Weise geschehen.

Über ein drehbares Absperrventil wird die Verbindungsleitung zum Raum hin verschlossen, indem eine Ausnehmung des Absperrventils verdreht wird. Ein Verbindung zwischen Verbindungsleitung und Leitung der Mischbatterie bleibt aber ständig geöffnet.

Ein derartiges Abschalten der Zirkulation kann auch bspw. mittels eines Heizwiderstandes erfolgen, welcher elektrisch geregelt wird. Dieser sitzt bevorzugt in einem Sackloch nahe des Thermostatventils, und erwärmt den Regler bzw. das Thermostatventil über seine Betriebstemperatur hinaus, so dass das Thermostatventil anspricht und seine Schubstange ausfährt, welche den darauf aufgesetzten Arbeitskolben gegen die Scheibe und damit gegen die Öffnung presst. Somit ist die Öffnung der Kammer ebenfalls verschlossen.

Ein derartiger Heizwiderstand kann bspw. an eine gemeinsame Steuerung angeschlossen sein, so dass bspw. mittels Zeitschaltuhr sämliche Zirkulationen in einem Gebäude ausser Betrieb gesetzt werden können. Dies kann bspw. über Nacht geschehen. Hierdurch werden erhebliche Energiekosten eingespart.

Ferner ist vom vorliegenden Erfindungsgedanken umfasst, dass die Strömungseigenschaften beim Umströmen des Thermostatventiles verbessert sein sollen. Hierzu kann es vorteilhaft sein, wenn der zylinderartige Raum nicht nur durch eine Lochscheibe, sondern auch durch eine geschlossene Scheibe getrennt ist. Im oberen Raum, insbesondere im Einlassraum ist der Arbeitskolben angeordnet, wobei im unteren Raum, insbesondere im Mischraum das Thermostatventil vorgesehen ist. Vorteilig ist, wenn nahe der Trennstelle zwischen Einlassraum und Mischraum eine Verbindung hergestellt ist. Diese ist bevorzugt seitlich im Gehäuse vorgesehen, so dass die Strömung vollständig den Arbeitskolben umströmt, durch den Kanal in den Mischraum gelangt und das Thermostatventil gleichmässig und allseits umströmt wird.

Damit dieses Umströmen zusätzlich verbessert ist, wird die abströmende Flüssigkeit durch einen, dem Kanal gegenüberliegenden Auslass abgeführt. Die Flüssigkeit muss also zwangsweise das Thermostatventil allseits umströmen. Hierdurch wird eine Temperaturänderung sehr schnell durch den optimalen Wärmeübergangskoeffizienten im Thermostatventil umgesetzt, so dass der Arbeitskolben je nach Temperatur ein- oder ausgefahren werden kann.

Ein mechanisches Absperrventil ist für die Funktion des Reglers nicht unbedingt erforderlich. Wird auf ein Absperrventil verzichtet, so ist im unteren Gehäuseteil des Reglers eine Verbindung zwischen dem zylinderartigen Raum und der Verbindungsleitung anstelle der Ausnehmung des Absperrventils hergestellt. Ein Abschalten des Reglers könnte dennoch elektrisch mittels eines Heizwiderstandes geschehen.

Ein weiterer wesentlicher Vorteil des Reglers ergibt sich durch seine schnelle Einbaumöglichkeit an herkömmliche Anschlüsse. Diese werden mit dem Regler verbunden. Da die Warmwasserleitung, Kaltwasserleitung und die beiden Leitungen der Mischbatterie direkt in einen gemeinsamen Deckel des Reglers münden, kann dieser fest an den Anschlüssen montiert bleiben.

Ist eine Wartung bspw. eine Reinigung od. dgl. erforderlich, so wird der untere Teil des Gehäuses durch Lösen der Befestigungselemente entfernt, und alle Teile des Reglers sind frei zugänglich. Hierdurch lässt sich auch sehr schnell bspw. ein anderes Thermostatventil einsetzen, wenn bspw. eine andere Betriebstemperatur gewünscht wird oder wenn dieses bspw. defekt ist.

Ferner bietet ein solcher Regler separat an einer Mischbatterie, oder als Bestandteil einer Mischbatterie, im Winter einen ausgezeichneten Frostschutz. Die Mischbatterie, Regler und Warm- und Kaltwasserleitungen sind vom einfrieren geschützt.

In einem weiteren Ausführungsbeispiel ist ein Regler dargestellt, in dessen Deckel die Leitungen für Kaltwasser und Warmwasser für eine Mischbatterie einmünden. Die Warmwasserleitung und Kaltwasserleitung greifen bei diesem Regler direkt in das Gehäuse ein. Zudem ist dem Gehäuse ein Deckelelement zugeordnet, über welches der zylinderartige Raum in welchem das Thermostatventil sitzt, zugänglich ist. Dieses Deckelement lässt zu, dass der Zylinderraum vollständig zu reinigen ist. Das Deckelelement muss hierzu lediglich herausgeschraubt werden. Dabei sind in dem Deckelelement mehrere Öffnungen vorgesehen, um eine Strömung zu beeinflussen. Gleichzeitig bildet das Deckelelement einen Ventilsitz für die als Ventil ausgebildete Scheibe, welche zwischen einer Öffnung und dem Arbeitskolben sitzt.

Von Vorteil bei der vorliegenden Erfindung ist auch, wenn alle die wesentlichen Bauteile des Reglers aus zumindest teilweise ferromagnetischem Material gebildet sind oder mit Dauermagneten bestückt werden.

Insgesamt ist mit der vorliegenden Erfindung ein Regler geschaffen, welcher kostengünstig herzustellen, einfach an herkömmliche Zirkulationssysteme nachrüstbar oder in Mischbatterien einbaubar ist. Ferner ist er leicht zu warten.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine blockschaltbildliche Darstellung einer Regelung einer zentralen Warmwasserversorgung mit erfindungsgemässem Regler;
Figur 2 eine Draufsicht auf den erfindungsgemässen Regler aus Figur 1;
Figur 3 einen Längsschnitt durch den Regler gemäss Figur 2 entlang Linie III-III;
Figur 4 einen weiteren Längsschnitt durch den Regler gemäss Figur 2 entlang Linie IV-IV;
Figur 5 eine Draufsicht auf ein unteres Gehäuseteil des Reglers gemäss Figur 4 entlang Linie V-V;
Figur 6 eine Draufsicht auf ein weiteres Ausführungsbeispiel eines weiteren erfindungsgemässen Reglers;
Figur 7 einen Längsschnitt durch den Regler gemäss Figur 6 entlang Linie VII-VII;
Figur 8 eine Draufsicht auf ein weiteres Ausführungsbeispiel eines erfindungsgemässen Reglers;
Figur 9 eine Draufsicht auf das geöffnete Gehäuseteil des Reglers gemäss Figur 8;
Figur 10 einen Längsschnitt durch den Regler gemäss Figur 8 entlang Linie X-X;
Figur 11 einen Längsschnitt durch den Regler gemäss Figur 8 entlang Linie XI-XI;
Figur 12 einen Längsschnitt durch den Regler gemäss den Figuren 8 und 9 entlang der Linien XII-XII;
Figur 13 eine Draufsicht eines schematisch dargestellten weiteren möglichen Deckels.

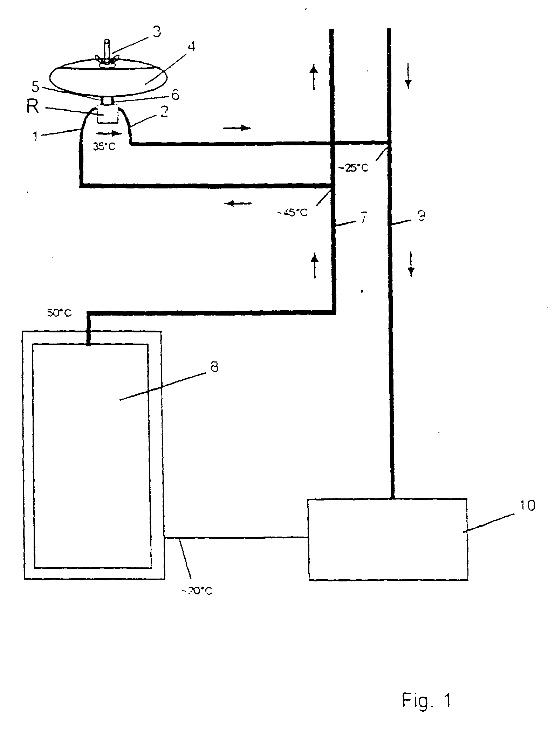

Gemäss Figur 1 ist ein erfindungsgemässer Regler R zwischen eine Warmwasser- und eine Kaltwasserleitung 2 eingesetzt. Der Regler R verbindet eine Mischbatterie 3 eines Waschbekkens 4 über Leitungen 5 und 6. Diese Leitungen 5 und 6 sind herkömmlicher Art und Bestandteile der Mischbatterie 3.

Die Warmwasserleitung 1 steht mit einer Hauptleitung 7 in Verbindung, welche ein Haus oder Gebäude mit Warmwasser zentral aus einem Warmwasserspeicher 8 versorgt. Die Hauptleitung 7 führt durch sämtliche Räume und Bereiche eines Gebäudes und versorgt entsprechende Abnehmer mit heissem Wasser.

Die Kaltwasserleitung 2 ist an eine Kaltwasserhauptleitung 9 angeschlossen, welche in eine Steuereinrichtung 10 mündet.

Die Steuereinrichtung 10 enthält Ventile, Drosselventile, Rückflussverhinderer, Zeitschaltuhren und dgl., sowie Überdruckventile, um die Druckverhältnisse im System zu regeln. Die Steuerungseinrichtung 10 steht mit dem zentralen Warmwasserspeicher 8 in Verbindung und führt diesem das kalte Wasser der Kaltwasserhauptleitung 9 zu.

Die Besonderheit der vorliegenden Erfindung liegt darin, dass der Regler R, wenn die Mischbatterie 3 nicht in Betrieb gesetzt ist, permanent warmes Wasser aus der Hauptleitung 7 über die Warmwasserleitung 1 entnimmt und der Kaltwasserleitung 2 zuführt. Dieses Wasser aus der Kaltwasserleitung 2 mündet dann in die Kaltwasserhauptleitung 9, wobei es von dort zur Steuereinrichtung 10 gelangt. Auf diesem Weg wird das kalte Wasser vorgewärmt. Von dort strömt das Wasser in den Warmwasserspeicher 8 und kann dort wieder entnommen werden.

Der Regler R schliesst bei einer bestimmten gewünschten Temperatur, vorzugsweise 35 °C, die Verbindung von Warmwasserleitung 1 zur Kaltwasserleitung 2. Sinkt die Temperatur im Regler R unter 35 °C ab, so öffnet der Regler R die Verbindung von Warmwasserleitung 1 zur Kaltwasserleitung 2 bis im Regler R sich die gewünschte Temperatur von bevorzugt 35 °C wieder einstellt. Dann trennt der Regler R diese Verbindung.

Dadurch steht unmittelbar am Regler R und direkt an der Mischbatterie 3 des Waschbeckens 4 warmes Wasser zur Verfügung. Dieses Wasser hat immer eine konstante Temperatur von ca. 35°C wenn die Mischbatterie 3 in Betrieb genommen wird. Andere Temperaturen können hier ebenfalls eingestellt werden.

Ein weiterer Vorteil der vorliegenden Erfindung ergibt sich durch die erhebliche Energiekostenreduktion, da nicht permanent das warme Wasser an der Mischbatterie 3 vorgeheizt werden muss und eine Zirkulation nur bedingt stattfindet. Nur wenn die Temperatur unter einen geeichten Wert abfällt, öffnet der Regler und die Zirkulation beginnt erneut.

Dabei kann der Regler R, sollte eine ständige Bereitstellung von Warmwasser am Regler für einen längeren Zeitraum oder bspw. über Nacht nicht gewünscht werden, elektrisch, mechanisch, pneumatisch oder sonstwie abgeschaltet werden. Somit kann durch Betätigen der Mischbatterie 3 direkt über die Warmwasserleitung 1 bzw. über die Kaltwasserleitung 2 die Mischbatterie 3 wie herkömmlich versorgt werden.

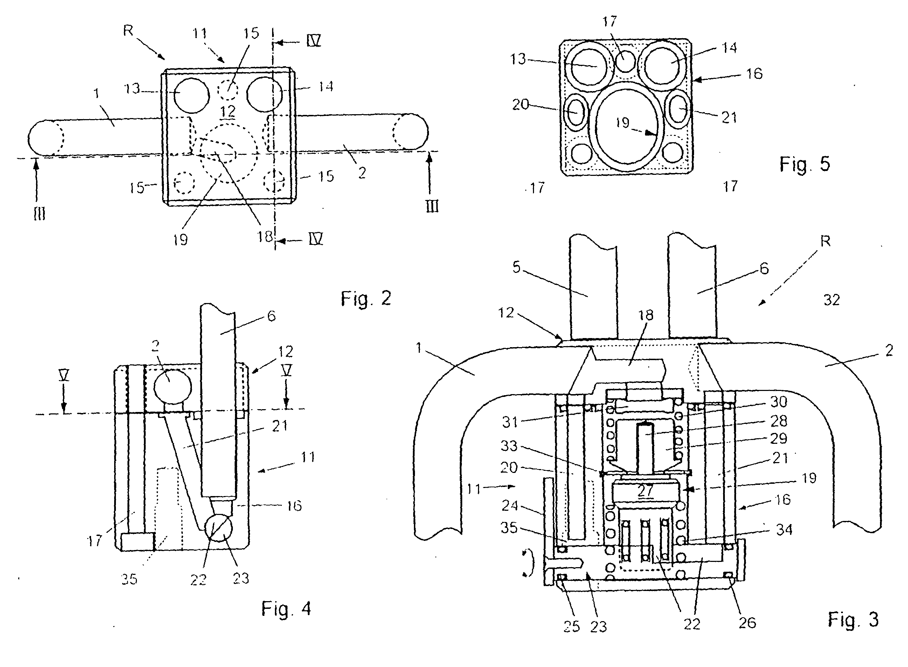

Gemäss Figur 2 weist der erfindungsgemässe Regler R ein Gehäuse 11 auf, welches aus Metall, Kunststoff oder anderen Materialien hergestellt sein kann. In das Gehäuse 11 münden Warmwasserleitung 1 und Kaltwasserleitung 2. Diese sind eingespannt, eingeklebt oder sonstwie mit dem Gehäuse 11 befestigt. In der Draufsicht nach Figur 2 sind in einem Deckel 12 des Gehäuses 11 Bohrungen 13, 14 vorgesehen, in welche die Leitung 5 für warmes, bzw. die Leitung 6 für kaltes Wasser eingreifen. Dies ist aus Figur 3 ersichtlich.

Im Deckel 12 sind die Warmwasserleitung 1, Kaltwasserleitung 2 und Leitungen 5 und 6 angeschlossen. Ferner sind entsprechende Gewindebohrungen 15 im Deckel 12 vorgesehen, um ein unteres Gehäuseteil 16 mittels Befestigungselementen 17, siehe Figur 4, gegenüber dem Deckel 12 wiederlösbar festzulegen. Da die Befestigungselemente 17 von unten gut erreichbar sind, lässt sich das untere Gehäuseteil 16 vom Deckel 12 schnell. entfernen, um ggf. Reinigungs- und Wartungsarbeiten vorzunehmen.

Ferner ist in Figur 2 gestrichelt angedeutet, wie von der Warmwasserleitung 1 in den Deckel 12 eine Kammer 18 einmündet. Diese verbindet die Warmwasserleitung 1 mit einem zylinderartigen Raum 19 des unteren Gehäuseteils 16. Eine weitere Verbindung stellt die Kammer 18 zu einer schrag nach unten laufenden Zuführung 20 her, welche auf die Leitung 5 trifft. Die Leitung 5 führt zur Mischbatterie 3 des Waschbeckens 4.

Die Kaltwasserleitung 2 mündet ebenfalls in den Deckel 12 und stellt eine Verbindung über eine Verbindungsleitung 21 einerseits zur Kaltwasserleitung 6 und andererseits über eine Ausnchmung 22 eines Absperrventils 23 zum zylinderarrigen Raum 19 her. Die Verbindungsleitung 21, siehe Figuren 4 und 5, verläuft entsprechend wie auch die Zuführung 20 schräg geneigt nach unten. Somit kann Wasser aus der Kaltwasserleitung 2 über die Verbindungsleitung 21 direkt der Leitung 6 zugeführt werden, wenn bspw. die Mischbatterie 3 betätigt wird.

Das Absperrventil 23 sitzt bevorzugt drehbar im unteren Bereich des unteren Gehäuseteiles 16 und ist mittels eines Hebels 24, wie in Pfeilrichtung dargestellt, siehe Figur 3, verdrehbar. Dichtelemente 25 und 26 bilden nach aussen eine Dichtung. Diese können O-Ringe herkömmlicher Art od. dgl. sein. In etwa mittig hinter dem Absperrventil 23 ist ein Thermostatventil 27 in den zylinderartigen Raum 19 des unteren Gehäuseteiles 16 eingesetzt. Es ist von herkömmlicher Art. Das Thermostatventil 27 ist mit einer Schubstange 28 bestückt, welche bei Erreichen einer bestimmten geeichten Temperatur nach oben ausfährt.

Auf die Schubstange 28 ist ein Arbeitskolben 29 aufgestülpt, welcher von einer Rückstellfeder 30 nach unten gedrückt wird. Zwischen der Kammer 18 und dem Arbeitskolben 29 ist eine Scheibe 31 eingesetzt, welche vor einer Öftnung 32 der Kammer 18 anliegt.

Die Scheibe 31 hat bevorzugt eine geringere Dichte als Wasser, so dass diese, wenn der zylindrische Raum 19 mit Wasser gefüllt ist und der Regler R senkrecht eingebaut ist, oben an der Öffnung 32 aufschwimmt und diese verschliesst. Bei umgekehrter Einbauweise des Reglers R nach unten, ist die Dichte der Scheibe 31 geringfügig schwerer als Wasser.

Zwischen dem Arbeitskolben 29 und dem Thermostatventil 27 ist eine Lochscheibe 33 eingesetzt. Diese Lochscheibo 33 stützt das Thermostatventil 27 und den Arbeitskolben 29 im Raum 19 ab. Ferner wirkt sie als Dämpfer und verwirbelt gleichzeitig das einströmende Wasser, so dass ein Temperaturabgleich am Thermostatventil 27 schnell geschieht. Sie dient auch zur Festlegung der Thermostatventils 27 im Raum 19.

Im äusseren Bereich um das Thermostatventil 27 und dem Arbeitskolben 29 kann Flüssigkeit durch die Lochscheibe 33 strömen. Diese dient auch zum Zentrieren von Thermostatventil 27 und Arbeitskolben 29 im zylindrartigen Raum 19. Ein Federelement 34 beaufschlagt das Thermostatventil 27 mit Druck gegen die Lochscheibe 33 bzw. gegen den Arbeitskolben 29, wobei dieser wiederum von der Rückstellfeder 30 gehalten wird, so dass sich ein Gleichgewicht einstellt.

Das Federelement 34 dient ferner zum Ausgleichen eines Überhubes des Thermostatventils 27, wenn die Temperatur im Raum 19 den eingestellten Wert erheblich übersteigt. In einem solchen Fall kann das Thermostatventil 27 nach unten ausweichen und wird anschliessend von dem Federelement 34 in seine Ausgangslage zurückbewegt.

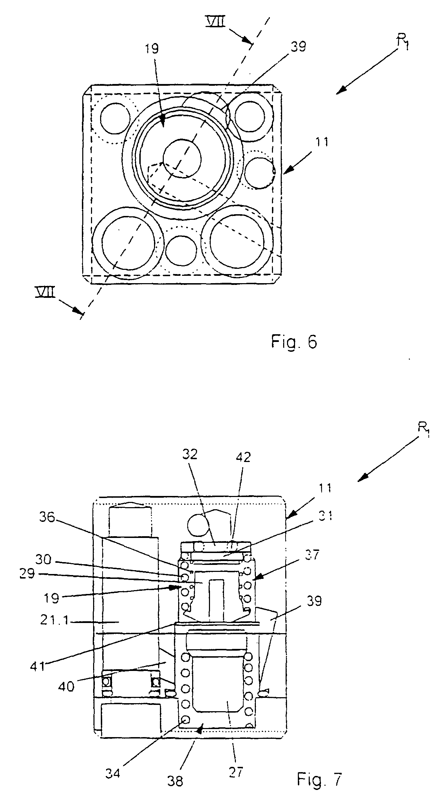

In einem weiteren Ausführungsbeispiel eines Reglers R₁ gemäss Figur 6, ist dem zylinderartigen Raum 19, welcher insbesondere als Mischraum ausgebildet ist, ein Kanal 39 seitlich zugeordnet. Der Kanal 39 stellt eine Verbindung zwischen einem Einlassraum 37 und einem Mischraum 38 her, wie es in Figur 7 dargestellt ist. Hierdurch wird gewährleistet, dass die Flüssigkeit, welche in den Einlassraum 38 einströmt, den Arbeitskolben 29 umströmt, durch den Kanal 39 in den Mischraum 38 befördert wird und bevorzugt seitlich auf, dass Thermostatventil 27 trifft. Das Thermostatventil 27 wird von der Strömung allseitig umströmt, wobei die Strömung durch einen Auslass 40 in eine Verbindungsleitung 21.1 mündet. Die Verbindungsleitung 21.1 steht mit der Kaltwasserleitung 2 in oben beschriebener Weise in Verbindung.

Wichtig ist hier, dass der seitliche Kanal 39 im Gehäuse 11 des Reglers R₁ gegenüberliegend dem Auslass 40 zugeordnet ist. Nur so wird gewährleistet, dass im Mischraum 38 das Thermostatventil 27 vollständig umströmt wird. Hierdurch wird eine Wärmeübertragung und insbesondere eine Temperaturänderung der Flüssigkeit am Thermostatventil schneller angezeigt.. Dieses reagiert sehr sensibel auf Temperaturschwankungen. Bevorzugt ist dann die oben beschriebene Lochscheibe 33 als Trennscheibe 41 ausgebildet, so dass der obere Einlassraum 37 von dem unteren Mischraum 38 zumindest teilweise getrennt und nur über den seitlichen Kanal 39 verbunden ist. Die Form des Kanales kann halbrundartig, rechteckartig oder sonstwie ausgebildet sein.

Eine weitere Besonderheit der vorliegenden Erfindung zeigt Figur 7, wobei ein Kraftspeicher 36, insbesondere ein Federelement die Scheibe 31 leicht mit Druck beaufschlagt. Der Kraftspeicher 36 ist andererseits am Arbeitskolben 29 abgestuft. Bevorzugt ist der Kraftspeicher 36 innerhalb der Rückstellfeder 30 geführt und bewirkt, dass die Scheibe 31, welche ventilartig wirkt immer leicht gegen die Öffnung 32 gedrückt wird. In der Öffnung 32 ist eine Dichtung 42 vorgesehen, gegen welche die Scheibe 31 kreisringartig gedrückt bzw. angelegt wird, um eine Dichtung herzustellen. Vorteilig ist hier, dass die Scheibe 31 nur beim Beaufschlagen von geringem Druck die Öffnung 42 freigibt, und in Richtung des Arbeitskolbens 29 bewegt wird. Die Strömung kann dann in den Einlassraum 37 eintreten und durch den Kanal 39 in den Mischraum 38 strömen. Dieser Kraftspeicher 36 bewirkt ferner, dass Schwingungen und insbesondere Resonanzen im Regler R₁ verhindert werden.

Die Funktionsweise der vorliegenden Erfindung ist folgende:

Wird bspw. von der Mischbatterie 3, wie sie in Figur 1 dargestellt ist, Wasser entnommen, so strömt warmes Wasser durch die Warmwasserleitung 1 in die Kammer 18 des Reglers P. Von der Kammer 18 stömt das Wasser über die Zuführung 20 in die Warmwasserleitung 5 der Mischbatterie 3 und versorgt diese mit heissem Wasser.2

Wird zusätzlich noch kaltes Wasser von der Mischbatterie 3 verwendet, so strömt kaltes Wasser von der Kaltwasserleitung 2 aus in den Regler R und durchströmt die Verbindungsleitung 21. Von dort gelangt das kalte Wasser in die Leitung 6 und wird der Mischbatterie 3 zugeführt. Ein weiterer Teil des Wasserstromes strömt durch die Ausnehmung 22 in den zylindrischen Raum 19 und bewirkt, dass die Scheibe 31, welche nach oben aufschwimmt,' gegen die Öffnung 32 gedrückt wird. Sie wirkt somit als Rückschlagventil. Kaltes Wasser kann deshalb nicht durch den zylindrischen Raum 19 zur Warmwasserleitung 1 gelangen, wenn kaltes Wasser über die Leitung 6 zur Mischbatterie 3 strömt.

Wird die Mischbatterie 3 nicht betätigt, so strömt warmes Wasser aus der Warmwasserleitung 1 in den Regler R und fliesst dort in die Kammer 18. Das warme Wasser passiert die Öffnung 32, und drückt die Scheibe 31 nach unten, wobei anschliessend das Wasser ausserhalb am Arbeitskolben 29 vorbei, durch den zylindrischen Raum 19 und durch die Lochscheibe 33 strömt. Anschliessend umströmt warmes, verwirbeltes Wasser das Thermostatventil 27 und gelangt durch die Ausnehmung 22 des geöffneten Absperrventils 23 zur Verbindungsleitung 21. Von dieser wird das Wasser der Kaltwasserleitung 2 zugeführt.

Dadurch wird die Temperatur des warmen Wassers unmittelbar durch das Thermostatventil 27 gemessen. Das Thermostatventil 27 bleibt solange geöffnet, bis ein bestimmter Grenzwert an Temperatur erreicht ist. Bevorzugt soll dieser hier bei 35°C liegen. Ist dieser Grenzwert erreicht, so fährt die Schubstange 28 nach oben aus, und schiebt den Arbeitskolben 29 in Richtung Scheibe 31. Diese wird gegen die Öffnung 32 gedrückt, wobei eine Warmwasserzufuhr, ein Durchströmen bzw. eine Zirkulation durch Verschliessen der Öffnung 32 unterbunden ist.

Sinkt die Temperatur im Regler R wieder ab, so wird die Schubstange 28 des Thermostatventils 27 eingefahren, der Arbeitskolben 29 wird mittels der Rückstellfeder 30 nach unten bewegt und gibt die Öffnung 32 wieder frei, so dass erneut warmes Wasser den Raum 19 durchstömen kann. Das Wasser strömt permanent durch den Raum 19, bzw. durch den Regler R, bis im Inneren die gewünschte Temperatur am Thermostatventil 27 erreicht ist. Anschliessend fährt der Arbeitskolben wieder aus und die Öffnung 32 wird geschlossen. Dieser Vorgang wiederholt sich automatisch.

Somit wird gewährleistet, dass immer eine bestimmte Wassertemperatur am Regler R bzw. an der Leitung 5 oder Mischbatterie 3 anliegt.

Ein weiterer Vorteil ist auch, dass in der Kaltwasserleitung 2 hinter dem Regler R schon vorgewärmtes Wasser vorhanden ist, wenn der Regler R beim Zirkulieren von warmem Nasser durchströmt wird.

Wenn durch Betätigen der Mischbatterie 3 die Leitung 6 geöffnet wird, fliesst vorgewärmtes Wasser der Kaltwasserleitung 2 in Richtung des Reglers R und von dort, wie oben genannt, über die Verbindungsleitung 21 in die Mischbatterie 3. Das Wasser aus der Kaltwasserhauptleitung 9 ist anfangs leicht vorgewärmt.

Eine weitere Besonderheit der vorliegenden Erfindung liegt auch darin, dass eine derartige Zirkulation mittels des Absperrventiles 23 abgeschaltet werden kann. Dies ist dann der Fall, wenn für einen gewissen Zeitraum bspw. nachts kein warmes Wasser unmittelbar an der Mischbatterie 3 sofort gebraucht wird.

Dazu ist nur erforderlich den Hebel 24 soweit zu verdrehen, bis die Ausnehmung 22 des Absperrventils 23 gegenüber der Verbindungsleitung 21 verschlossen ist. Eine Zirkulation zum Bereitstellen von warmem Wasser am Regler R bzw. an der Mischbatterie 3 selbst, ist dann nicht mehr möglich.

Eine weitere Möglichkeit eine Zirkulation abzuschalten kann auch elektrisch geschehen, wenn bspw. wie in Figur 4 gestrichelt angedeutet, in ein Sackloch 35 ein Heizwiderstand eingesetzt ist. Dieser ist elektrisch regelbar bzw. ansteuerbar. Der Heizwiderstand erwärmt den Regler R und insbesondere das Thermostatventil 27 auf eine bestimmte Betriebstemperatur, die geringfügig über der Temperatur des Thermostatventils 27 liegt. Somit schliesst das Thermostatventil 27 durch Ausfahren der Schubstange 28 gegen den Arbeitskolben 29 und Scheibe 31 die Öffnung 32, so dass eine Zirkulation unterbunden ist. Der Heizwiderstand kann am Regler R selbst und/oder extern bspw. über die Steuereinrichtung 10 angesteuert werden.

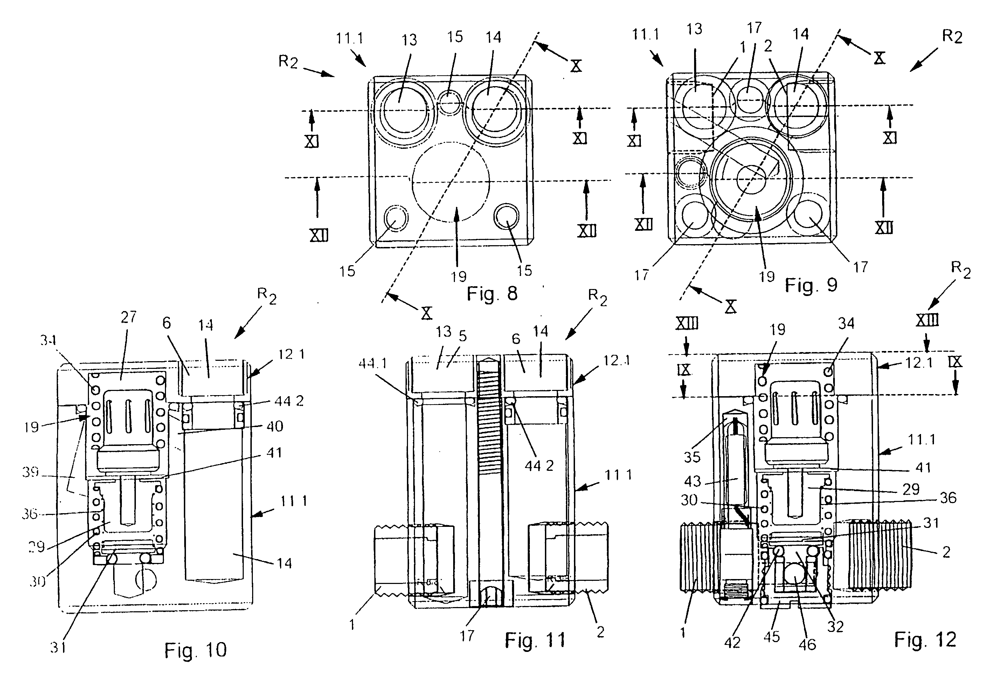

In einem weiteren Ausführungsbeispiel der vorliegenden Erfindung gemäss den Figuren 8 bis 12 ist ein weiterer Regler R₂, welcher im wesentlichen die Bauteile des Reglers R, gemäss den Figuren 3 und 7 aufweist, aufgezeigt. Lediglich die Anschlüsse und Anschlussmöglichkeiten sind hier von anderer Art. Auf die Beschreibung der einzelnen Bauteile wird deshalb verzichtet.

Wichtig bei dem vorliegenden Regler R₂ ist, dass vorzugsweise alle Bauteile mit zumindest einem Dauermagneten bestückt oder aus ferromagnetischen Materialien hergestellt sein können. Dies bewirkt, dass der Bestandteil des Wassers Kalk im Regler R₂ selbst nicht ausgefällt wird. Hierdurch werden Kalkablagerungen im Innenraum des Reglers vermindert, so dass dieser immer seine Funktion gewährleistet.

Im Rahmen der Erfindung soll jedoch auch liegen, dass für die Regler R und R₁ die Bauteile aus ferromagnetischem Material hergestellt sind bzw. mit einem Dauermagneten bestückt sind.

Eine weitere Besonderheit des Reglers R₂ zeigen die Figuren 10 bis 12. Dort ist erkennbar, wie der Deckel 12.1 von dem Gehäuse 11.1 auf einfache Weise demontierbar ist. Vorzugsweise ist der Deckel 12.1 mittels drei Befestigungselementen 17 mit dem Gehäuse 11.1 verbunden. Auf diese Weise kann sehr einfach, beispielsweise aus dem Inneren des Gehäuses 11.1 das Thermostatventil 27 mit daran anschliessender Scheibe 41 und Arbeitskolben 29 sowie Rückstellfeder 30 und Kraftspreicher 36 sowie Federelement 34 und Schweibe 31 aus dem zylinderartigen Raum 19 entnommen werden.

Auch die Anschlüsse für Leitungen 5, 6, welche in die Bohrungen 13, 14 eingreifen, können mit einem hier nicht bezifferten Innengewinde direkt verbunden werden. Dabei können auch längliche Leitungen 5, 6 in die Bohrungen 14, 15 eingreifen, welche durch Anziehen des Deckels 12.1 über die Dichtringe 44.1, 44.2 gegenüber dem Gehäuse 11.1 festgelegt und abgedichtet werden.

Ferner schliesst, wie insbesondere in Figur 11 ersichtlich ist die Warmwasserleitung 1 und Kaltwasserleitung 2 im unteren Bereich an das Gehäuses 11.1 an. Dabei münden in die Bohrungen 13, 14 die hier nicht abgebildeten Leitungen 5, 6 ein. Diese sind in oben beschriebener Weise entweder direkt über ein Innengewinde mit dem Deckel 12.1 verbunden oder durchgreifen den Deckel 12.1 und ragen in das Gehäuse 11.1 ein. Dort werden sie durch die Dichtringe 44.1, 44.2 festgelegt und abgedichtet.

Wichtig ist auch, dass beim Durchgreifen der Leitungen 5, 6 durch den Deckel 12.1 in das Gehäuse 11.1 zwischen die Bohrungen 13, 14 und einer eingeschobenen Leitung 5, 6 ein Zwischenraum entsteht, durch welches die Flüssigkeit strömen kann.

Bei der vorliegenden Erfindung ist auch von Bedeutung, dass Warmwasserleitung 1 sowie Kaltwasserleitung 2 als einsteckbare Rohre bspw. mit einer Abschlusskappe auf ein Aussengewinde am Gehäuse 11.1 festgelegt oder direkt in ein nicht näher beziffertes Innengewinde eingeschraubt werden können.

Von Vorteil ist auch, dass ein Heizwiderstand 43 in dem Sackloch 35 vorgesehen ist, welcher den benachbarten zylinderartigen Raum 19 sowie das gesamte Gehäuse 11.1 des Reglers regelbar beheizt, um das Thermostatventil 27 auf diese Weise zu regeln.

Eine weitere Besonderheit der vorliegenden Erfindung zeigt Figur 12. Dort ist im Gehäuse 11.1 vorzugsweise zwischen Warmwasserleitung 1 und Kaltwasserleitung 2 ein Deckelelement 45 vorgesehen, welches eine Mehrzahl von Öffnungen 46 aufweist, durch welche die entsprechenden Flüssigkeiten strömen können.

Durch Entnehmen dieses Deckels 45 lassen sich zu Wartungsarbeiten, beispielsweise der innenraum 19 säubern bzw. auch die einzelnen Dichtungen austauschen. Ferner bildet der Deckel 45 gleichzeitig ein Auflager bzw. Ventilsitz für die Scheibe 31. Dabei ist der Deckel 45 ebenfalls mit einer Dichtung 42 versehen. Die Scheibe 31, welche als Ventil wirkt, kann in einem unterschiedlichen Abstand durch unterschiedliches Eindrehen des Deckelementes 45 zum Arbeitskolben 29 angeordnet werden. Auf diese Weise lassen sich Temeperaturbereiche durch die Veränderung der Höhe des Ventilsitzes von etwa zwischen 5° und 10° erreichen. Hierdurch lässt sich ebenfalls Einfluss auf die Temperatur nehmen, welches das Ventil ca. zwischen 30° und 40 ° C schliesst.

Über den Heizwiderstand 45 lässt sich der Regler R₂ abstellen, wenn die entsprechende Betriebstemperatur erreicht ist und die Scheibe 31 als Ventil gegen die Öffnung 32 gedrückt wird, um diese zu verschliessen.

Vom vorliegenden Erfindungsgedanken sei auch umfasst, dass dem Deckelelement 45 ein Siebelement zugeordnet sein kann, um als Vorfilter Verunreinigungen aufzufangen.

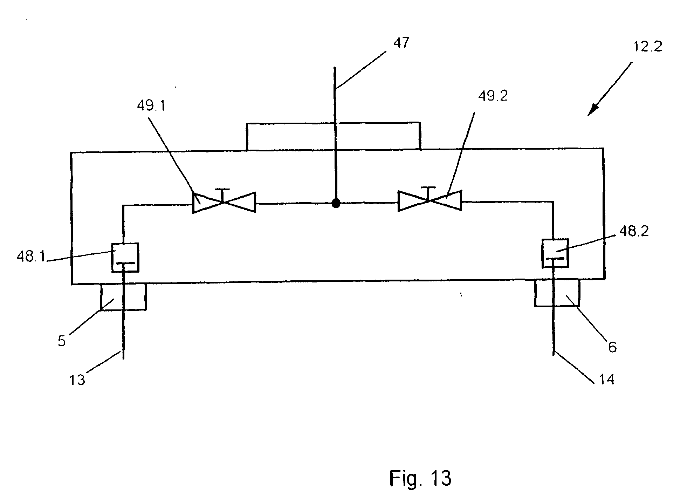

In einem weiteren Ausführungsbeispiel der vorliegenden Erfindung gemäss Figur 13 ist ein Deckel 12.2 aufgezeigt, welcher an die Leitungen 5, 6 bzw. Bohrungen 13, 14 anschliessbar ist. Die Besonderheit dieses Deckels 12.2 liegt darin, dass die Leitungen 5, 6 im Deckel 12.2 miteinander regelbar zu einer gemeinsamen Anschlussleitung 47 verbunden werden. Dabei schliesst sich an die Leitungen 5, 6 jeweils ein Rückschlagventil 48.1, 48.2 und anschliessend ein regelbares Ventil 49.1, 49.2 an. Im Anschluss an die beiden Ventile 49.1, 49.2 mündet die Anschlussleitung 47 ein. Diese mündet beispielsweise in eine einzige Mischbatterie mit nur einer einzigen Leitung. Über die Ventile 49.1, 49.2 kann eine fest einstellbare und gewünschte Temperatur für beispielsweise berührungslose Anschlussleitungen oder Mischbatterien regelbar eingestellt werden. Ein derartiger Deckel 12.1 kann anstelle des Deckels 12.1, dem Gehäuse 11.1 aufgesetzt werden.

Im Rahmen der vorliegenden Erfindung soll jedoch auch liegen, dass ein derartiger Regler R, R₁, R₂ wie er hier dargestellt ist, direkt in die Mischbatterie 3 eingebaut sein kann.

Ein weiterer Vorteil der vorliegenden Erfindung ist, dass sich ein derartiger Regler R, R₁, R₂ auf sehr einfache Weise an herkömmliche Mischbatterien und an herkömmliche Zirkulationsleitungen anschliessen lässt. Ein Nachrüsten ist daher jederzeit möglich.

| **Positionszahlenliste** | | | | | |
|---|---|---|---|---|---|
| 1 | Warmwasserleitung | 34 | Federelement | 67 | |
| 2 | Kaltwasserleitung | 35 | Sackloch | 68 | |
| 3 | Mischbatterie | 36 | Kraftspeicher | 69 | |
| 4 | Waschbecken | 37 | Einlassraum | 70 | |
| 5 | Leitung | 38 | Mischraum | 71 | |
| 6 | Leitung | 39 | Kanal | 72 | |
| 7 | Hauptleitung | 40 | Auslass | 73 | |
| 8 | Warmwasserspeicher | 41 | Trennscheibe | 74 | |
| 9 | Kaltwasserhauptleitung | 42 | Dichtung | 75 | |
| 10 | Steuereinrichtung | 43 | Heizwiderstang | 76 | |
| 11 | Gehause | 44 | Dichtring | 77 | |
| 12 | Deckel | 45 | Deckelelement | 78 | |
| 13 | Bohrung | 46 | Offnungen | 79 | |
| 14 | Bohrung | 47 | Anschlussleitung | R | Regler |
| 15 | Gewindebonrung | 48 | Rückschlagventil | R₁ | Regler |
| 16 | unteres Gehäuseteil | 49 | regelbares Ventil | | |
| 17 | Befestigungselemente | 50 | | | |
| 18 | Kammer | 51 | | | |
| 19 | zylinderartiger Raum | 52 | | | |
| 20 | Zuführung | 53 | | | |
| 21 | Verbindungsleitung | 54 | | | |
| 22 | Ausnehmung | 55 | | | |
| 23 | Absperrventil | 56 | | | |
| 24 | Hebel | 57 | | | |
| 25 | Dichtelement | 58 | | | |
| 26 | Dichtelement | 59 | | | |
| 27 | Thermostatventil | 60 | | | |
| 28 | Schubstange | 61 | | | |
| 29 | Arbeitskolben | 62 | | | |
| 30 | Rucksteilfeger | 63 | | | |
| 31 | Scheibe | 64 | | | |
| 32 | Offnung | 65 | | | |
| 33 | Lochscheibe | 66 | | | |

## Patentansprüche

1. Regler, insbesondere Zirkulationsregler zum Bereitstellen von erwärmtem Wasser an einen Abnehmer, einer Mischbatterie (3) oder dgl. Verbraucher, wobei im Regler zwischen einer Warmwasserleitung (1) und einer Kaltwasserleitung (2) eine Verbindung temperaturabhängig hergestellt oder unterbrochen ist und eine Verbindung zwischen Warmwasserleitung (1) und einer Warmwasserzuführleitung (5), sowie eine Verbindung zwischen Kaltwasserleitung (2) und einer Kaltwasserzuführleitung (6) hergestellt ist, welche mit der Mischbatterie (3) verbunden sind,
**dadurch gekennzeichnet,**
**dass** in ein Gehäuse (11) die Warmwaserleitung (1), Kaltwasserleitung (2), sowie die Warmwasserzuführ- und Kaltwasserzuführleitungen (5) und (6) einmünden, in welchem ein zylinderartiger Raum (19) mit eingesetztem Thermostatventil (27) vorgesehen ist, und eine Verbindung zwischen Warmwasserleitung (1) und dem Raum (19) eine Öffnung (32) bildet, welche von einer Scheibe (31), deren spezifisches Gewicht etwa dem des Wassers entspricht, verschliessbar ist.

2. Regler nach Anspruch 1 , **dadurch gekennzeichnet, dass** ein Thermostatventil (27) im unteren Gehäuseteil (16) auf einem Federelement (34) sitzt, wobei auf der Schubstange (28) eine Lochscheibe (33) und anschliessend ein Arbeitskolben (29) angeordnet ist, wobei der Arbeitskolben (29) von einer Rückstellfeder (39) mit Druck beaufschlagt ist, welche ggf. am Deckel (12) anliegt.

3. Regler nach Anspruch 1 oder 2, **dadurch gekennzeichnet, dass** nahe dem Raum (19), insbesondere nahe dem Thermostatventil (27) ggf. in einer Bohrung (35) oder in einem dem Gehäuse (11, 11.1) zugeordneten Sackloch (33) ein Heizwiderstand (43) angeordnet ist.

4. Regler nach Anspruch 2 oder 3, **dadurch gekennzeichnet, dass** in einen Deckel (12) eines Gehäuses (11) die Warmwasserleitung (1), Kaltwasserleitung (2), sowie die Warmwasserzuführ- und Kaltwasserzuführleitungen (5) und (6) einmünden.

5. Regler nach Anspruch 4, **dadurch gekennzeichnet, dass** an den Deckel (12, 12.1) ein unteres Gehäuseteil (16, 16.1) anschliesst, welches mittels Befestigungselementen (17) am Deckel (12, 12.1) wiederlösbar angeordnet ist.

6. Regler nach Anspruch 4 oder 5, **dadurch gekennzeichnet, dass** hinter der Wasserleitung (1) im Deckel (12) eine Kammer (18) gebildet ist, welche eine Verbindung über eine Öffnung (32) zu einem zylinderartigen Raum (19) im unteren Gehäuseteil (16) herstellt.

7. Regler nach Anspruch 6, **dadurch gekennzeichnet, dass** die Kammer (18) und/oder die Wasserleitung (1) eine weitere Verbindung zu einer Zuführung (20) herstellt, welche mit der Kaltwasserzuführleitung (6) verbunden ist.

8. Regler nach wenigstens einem der Ansprüche 4 bis 7, **dadurch gekennzeichnet, dass** die Kaltwasserleitung (2) im Deckel (12) mit einer Verbindungsleitung (21) verbunden ist und eine Verbindung zur Kaltwasserzuführleitung (6) herstellt, wobei die Verbindungsleitung (21), ggfs. über eine Ausnehmung (22) eines Absperrventils (23) mit dem zylinderartigen Raum (19) verbunden ist.

9. Regler nach wenigstens einem der Ansprüch 1 bis 8, **dadurch gekennzeichnet, dass** zwischen Arbeitskolben (29) und der Öffnung (32) innerhalb der Rückstellfeder (30) eine Scheibe (31) vorgesehen und querschnittlich grösser als die Öffnung (32) ausgebildet und ein spezifisches Gewicht der Scheibe (31) geringfügig leichter oder schwerer als Wasser ist.

10. Regler nach wenigstens einem der Ansprüche 1 bis 9, **dadurch gekennzeichnet, dass** der Raum (19) mit den Elementen Thermostatventil (27), Lochscheibe (33), Arbeitskolben (29), Scheibe (31), Rückstellfeder (30) und Federelement (34) von der Kammer (18) zur Verbindungsleitung (21) hin, durchströmbar ist.

11. Regler nach wenigstens einem der Ansprüche 1 bis 10, **dadurch gekennzeichnet, dass** die Scheibe (31) mittels eines Kraftspeichers (36) gegen die Öffnungen (32) gehalten ist, welcher zwischen Scheibe (31) und Arbeitskolben (29) angeordnet ist.

12. Regler nach wenigstens einem der Ansprüche 1 bis 11, **dadurch gekennzeichnet, dass** der Kraftspeicher (36) die Scheibe (31) mit Druck gegen die Öffnungen (32) beaufschlagt, wobei der Kraftspeicher (36) ggfs. als Federelemenet ausgebildet und innerhalb der Rückstellfeder (30) geführt ist.

13. Regler nach wenigstens einem der Ansprüche 1 bis 12, **dadurch gekennzeichnet, dass** der zylinderartige Raum (19) in einen Einlassraum (37) und daran anschliessenden Mischraum (38) unterteilt ist, wobei der Einlassraum (37) mit dem daran anschliessenden Mischraum (38) ggfs. über einen Kanal (39) zumindest teilweise verbunden ist und der Kanal (39) einem Auslass (40) des Mischraumes (38) gegenüberliegend angeordnet ist.

14. Regler nach wenigstens einem der Ansprüche 1 bis 13, **dadurch gekennzeichnet, dass** in einem Deckel (12.1) die Leitungen (5, 6) und in ein daran anschliessendes Gehäuse (11.1) die Warmwasserleitung (1) und Kaltwasserleitung (2) einmündet.

15. Regler nach wenigstens einem der Ansprüche 1 bis 14, **dadurch gekennzeichnet, dass** in das Gehäuse (11, 11.1) wiederlösbar ein Deckelelement (45) zu einem Raum (19) hin eingreift und einen veränderbaren, ggfs. höhenverstellbaren Ventilsitz für die Scheibe (31) bildet und in dem Deckelement (45) eine Mehrzahl von Öffnungen (46) vorgesehen ist.

16. Regler nach wenigstens einem der Ansprüche 1 bis 15, **dadurch gekennzeichnet, dass** die Elemente (11, 11.2, 12, 12.1, 16, 17, 23, 24, 27 bis 34, 41, 45, 48) aus zumindest teilweise ferromagnetischem Material hergestellt sind.

## Claims

1. Regulator, more especially a circulation regulator for providing heated water to a consumer, a mixer assembly (3) or similar consuming device, a connection being established or interrupted, in a temperature-dependent manner, in the regulator between a hot water pipe (1) and a cold water pipe (2), and a connection being established between hot water pipe (1) and a hot water supply pipe (5), as well as a connection being established between cold water pipe (2) and a cold water supply pipe (6), which pipes are connected to the mixer assembly (3), **characterised in that** the hot water pipe (1), cold water pipe (2), as well as the hot water supply pipe (5) and the cold water supply pipe (6) terminate in a housing (11), in which a cylinder-shaped space (19) having an inserted thermostatic valve (27) is provided, and a connection between hot water pipe (1) and the space (19) forms an opening (32), which can be closed by a disc (31), the specific weight of which corresponds substantially to that of the water.

2. Regulator according to claim 1, **characterised in that** a thermostatic valve (27) sits in the lower housing part (16) on a resilient member (34), a perforated disc (33) and subsequently an operating piston (29) being disposed on the push rod (28), the operating piston (29) being acted upon with pressure by a return spring (39)*, which possibly abuts against the cover (12).

3. Regulator according to claim 1 or 2, **characterised in that** a heating resistor (43) is disposed in the vicinity of the space (19), more especially in the vicinity of the thermostatic valve (27), possibly in a bore (35) or in a blind bore (33) associated with the housing (11, 11.1).

4. Regulator according to claim 2 or 3, **characterised in that** the hot water pipe (1), cold water pipe (2), as well as the hot water supply pipe (5) and cold water supply pipe (6) terminate in a cover (12) of a housing (11).

5. Regulator according to claim 4, **characterised in that** a lower housing part (16, 16.1), which is re-releasably disposed on the cover (12, 12.1) by means of securement members (17), communicates with the cover (12, 12.1).

6. Regulator according to claim 4 or 5, **characterised in that**, behind the water pipe (1) in the cover (12), a chamber (18) is formed which establishes a connection via an opening (32) to a cylinder-shaped space (19) in the lower housing part (16).

7. Regulator according to claim 6, **characterised in that** the chamber (18) and/or the water pipe (1) establishes an additional connection to a supply means (20), which is connected to the cold water supply pipe (6).

8. Regulator according to at least one of claims 4 to 7, **characterised in that** the cold water pipe (2) is connected to a connection pipe (21) in the cover (12) and establishes a connection to the cold water supply pipe (6), the connection pipe (21) being connected to the cylinder-shaped space (19), possibly via a recess (22) of a shut-off valve (23).

9. Regulator according to at least one of claims 1 to 8, **characterised in that**, between operating cylinder (29) and the opening (32) within the return spring (30), a disc is provided and is configured to have a cross-section greater than the opening (32), and a specific weight of the disc (31) is slightly lighter or heavier than water.

10. Regulator according to at least one of claims 1 to 9, **characterised in that** the space (19), with the elements: thermostatic valve (27), perforated disc (33), operating piston (29), disc (31), return spring (30) and resilient member (34) from the chamber (18) to the connection pipe (21), can have water flowing therethrough.

11. Regulator according to at least one of claims 1 to 10, **characterised in that** the disc (31) is retained against the openings (32) by means of a force-storage means (36), which is disposed between disc (31) and operating piston (29).

12. Regulator according to at least one of claims 1 to 11, **characterised in that** the force-storage means (36) urges the disc (31) with pressure against the openings (32), the force-storage means (36) possibly being configured as a resilient member and being guided within the return spring (30).

13. Regulator according to at least one of claims 1 to 12, **characterised in that** the cylinder-shaped space (19) is divided into an inlet space (37) and a mixing space (38) communicating therewith, the inlet space (37) being connected at least partially to the mixing space (38) communicating therewith, possibly via a duct (39), and the duct (39) being disposed opposite one outlet (40) of the mixing space (38).

14. Regulator according to at least one of claims 1 to 13, **characterised in that** the pipes (5, 6) terminate in a cover (12.1), and the hot water pipe
(1) and cold water pipe (2) terminate in a housing (11.1) communicating with said cover.

15. Regulator according to at least one of claims 1 to 14, **characterised in that** a cover member (45) engages re-releasably in the housing (11, 11.1) towards an area (19) and forms a variable, and possibly a vertically adjustable, valve seat for the disc (31), and a plurality of openings (46) is provided in the cover member (45).

16. Regulator according to at least one of claims 1 to 15, **characterised in that** the elements (11, 11.2, 12, 12.1, 16, 17, 23, 24, 27 to 34, 41, 45, 48) are produced from at least partially ferromagnetic material.

## Revendications

1. Régulateur, en particulier régulateur de circulation destiné à fournir de l'eau chauffée à un consommateur, un robinet mélangeur (3) ou autres consommateurs, dans le régulateur étant établie ou interrompue, en fonction de la température, une connexion entre une tuyauterie d'eau chaude (1) et une tuyauterie d'eau froide (2) et étant établies une connexion entre la tuyauterie d'eau chaude (1) et une tuyauterie d'alimentation d'eau chaude (5) ainsi qu'une connexion entre la tuyauterie d'eau froide (2) et une tuyauterie d'alimentation d'eau froide (6) qui sont raccordées au robinet mélangeur (3),
**caractérisé par le fait**
**que** la tuyauterie d'eau chaude (1), la tuyauterie d'eau froide (2) ainsi que les tuyauteries d'alimentation d'eau chaude et d'eau froide (5) et (6) aboutissent dans un boîtier (11) dans lequel est prévu un espace cylindrique (19) à soupape thermostatique (27) incorporée et qu'une connexion entre la tuyauterie d'eau chaude (1) et l'espace (19) forme une ouverture (32) pouvant être obturée par un disque (31) dont le poids spécifique correspond environ à celui de l'eau.

2. Régulateur selon la revendication 1, **caractérisé par le fait qu'**une soupape thermostatique (27) se situe dans l'élément de boîtier inférieur (16) sur un élément ressort (34), sur la bielle (28) étant disposés un disque perforé (33) et ensuite un piston frappeur (29), le piston frappeur (29) étant soumis à une pression par un ressort de rappel (39) qui s'appuie éventuellement contre le couvercle (12).

3. Régulateur selon la revendication 1 ou 2, **caractérisé par le fait que** près de l'espace (19), en particulier près de la soupape thermostatique (27), est éventuellement disposée, dans un alésage (35) ou dans un trou borgne (33) associé au boîtier (11, 11.1), une résistance chauffante (43).

4. Régulateur selon la revendication 2 ou 3, **caractérisé par le fait que** dans un couvercle (12) d'un boîtier (11) aboutissent la tuyauterie d'eau chaude (1), la tuyauterie d'eau froide (2) ainsi que les tuyauteries d'alimentation d'eau chaud et d'eau froide (5) et (6).

5. Régulateur selon la revendication 4, **caractérisé par le fait qu'**au couvercle (12, 12.1) aboute un élément de boîtier inférieur (16, 16.1) disposé, au moyen d'éléments de fixation (17), de manière amovible sur le couvercle (12, 12.1).

6. Régulateur selon la revendication 4 ou 5, **caractérisé par le fait que** derrière la tuyauterie d'eau (1) est formée, dans le couvercle (12), une chambre (18) établissant une connexion, par l'intermédiaire d'une ouverture (32), avec un espace cylindrique (19) dans l'élément de boîtier inférieur (16).

7. Régulateur selon la revendication 6, **caractérisé par le fait que** la chambre (18) et/ou la tuyauterie d'eau (1) établit une autre connexion avec une alimentation (20) reliée à la tuyauterie d'alimentation d'eau froide (6).

8. Régulateur selon au moins l'une des revendications 4 à 7, **caractérisé par le fait que** la tuyauterie d'eau froide (2) est reliée, dans le couvercle (12), à une tuyauterie de liaison (21) et établit une connexion avec la tuyauterie d'alimentation d'eau froide (6), la tuyauterie de liaison (21) étant éventuellement reliée, par l'intermédiaire d'un évidemment (22) d'une soupape d'arrêt (23), à l'espace cylindrique (19).

9. Régulateur selon au moins l'une des revendications 1 à 8, **caractérisé par le fait qu'**un disque (31) est prévu, dans le ressort de rappel (30), entre le piston frappeur (29) et l'ouverture (32) et est réalisé de section plus en grande que l'ouverture (32) et qu'un poids spécifique du disque (31) est légèrement plus léger ou plus lourd que l'eau.

10. Régulateur selon au moins l'une des revendications 1 à 9, **caractérisé par le fait que** l'espace (19) avec les éléments soupape thermostatique (27), disque perforé (33), piston frappeur (29), disque (31), ressort de rappel (30) et élément ressort (34) peut être traversé de la chambre (18) vers la tuyauterie de connexion (21).

11. Régulateur selon au moins l'une des revendications 1 à 10, **caractérisé par le fait que** le disque (31) est maintenu contre les ouvertures (32) au moyen d'un accumulateur de force (36) qui est disposé entre le disque (31) et le piston frappeur (29).

12. Régulateur selon au moins l'une des revendications 1 à 11, **caractérisé par le fait que** l'accumulateur de force (36) soumet le disque (31) à une pression contre les ouvertures (32), l'accumulateur de force (36) se présentant éventuellement sous forme d'élément ressort et étant guidé à l'intérieur du ressort de rappel (30).

13. Régulateur selon au moins l'une des revendications 1 à 12, **caractérisé par le fait que** l'espace cylindrique (19) est subdivisé en une chambre d'entrée (37) et une chambre de mélange (38) suivant cette dernière, la chambre d'entrée (37) étant reliée au moins partiellement à la chambre de mélange (38) suivant cette dernière, éventuellement par l'intermédiaire un canal (39), et que le canal (39) est disposé vis-à-vis d'une sortie (40) de la chambre de mélange (38).

14. Régulateur selon au moins l'une des revendications 1 à 13, **caractérisé par le fait que** dans un couvercle (12.1) aboutissent les tuyauteries (5, 6) et dans un boîtier (11.1) y aboutant aboutissent la tuyauterie d'eau chaude (1) et la tuyauterie d'eau froide (2).

15. Régulateur selon au moins l'une des revendications 1 à 14, **caractérisé par le fait qu'**un élément de couvercle (45) s'engage, de manière amovible, en direction d'un espace (19), dans le boîtier (11, 11.1) et constitue un siège de soupape variable, éventuellement réglable en hauteur, pour le disque (31) et que dans l'élément de couvercle (45) est prévue une pluralité d'ouvertures (46).

16. Régulateur selon au moins l'une des revendications 1 à 15, **caractérisé par le fait que** les éléments (11, 11.2, 12, 12.1, 16, 17, 23, 24, 27 à 34, 41, 45, 48) sont réalisés en un matériau au moins partiellement ferromagnétique.
